# EUROPEAN PATENT SPECIFICATION

(11) **EP 1 080 292 B1**
(45) Date of publication and mention of the grant of the patent: **13.10.2010**
(21) Application number: 99921954.6
(22) Date of filing: 13.05.1999
(51) Int. Cl.: E05F 5/06, F16B 21/00

(54) **AUTOMOTIVE DECK LID BUMPER**
KOFFERRAUMDECKELSTOSSDÄMPFER FÜR EIN KRAFTFAHRZEUG
PARE-CHOCS DE PORTE DE COFFRE ARRIERE D'AUTOMOBILE

(30) Priority: 22.05.1998 US 82994; 23.03.1999 US 274858
(43) Date of publication of application: 07.03.2001
(73) Proprietor: SOUTHCO, INC., Concordville, PA 19331 (US)
(72) Inventor: ANTONUCCI, Jeffrey L., Norton, Worcester WR5 2PL (GB); WEUTHEN, Thomas, J., D-41812 Erkelent (DE)
(74) Representative: Robba, Pierpaolo
(86) International application number: PCT/US1999/010610
(87) International publication number: WO 1999/061740

(56) References cited:
- EP-A- 0 611 868
- DE-U1- 29 716 111
- US-A- 2 730 154
- US-A- 4 867 725
- US-A- 4 924 549

## Description

### BACKGROUND OF THE INVENTION

This invention relates to the means and method that automotive deck lids are fitted to the frame of automobiles such that proper alignment of the deck lid with respect to the automotive panels is achieved. More particularly, the present invention relates to an automotive deck lid bumper assembly that adjustably engages the deck lid of an automobile as it is brought down into a locked position, such that the deck lid mates flush with the surrounding automobile body panels. Typically, at least two deck lid bumpers are provided on two sides of a door, trunk, hatch, engine compartment lids, or the like to align the lid with the adjacent body panels, for example, to align an engine compartment lid with its adjacent automobile fenders.

When mounting automotive deck lids, including trunk lids, hood lids, doors, hatches, and the like, it has been difficult and time consuming to adjust the traditionally screw mounted bumpers to adjust the right height position for the deck lid to be flush with surrounding body panels and for the deck lid latch to properly engage. To accomplish proper alignment, prior to the present invention, a bumper must be mounted, the hood must be closed, a reading of how far out of alignment the deck lid is taken, the hood must be opened, the bumper must be adjusted, and the hood must then be closed again to double check. This process may be required to be repeated several times to achieve proper alignment of the deck lid with respect to the other automotive panels.

One form of prior art for such bumpers includes an aperture formed in the frame of the automobile beneath the deck lid which includes a helical thread. This rubber bumper having a stud portion and a head portion also contains a mating helical thread about the shaft portion of the bumper. The bumper is rotated into the aperture by a sufficient number of revolutions so that the head portion of the bumper is lowered (or raised) to a desired alignment position such that the deck lid is flush with its adjacent body panels. A major drawback to this particular design is that, after numerous closings of the hood, heat, vibration, shock and the like can cause the threaded shaft portion of the bumper to loosen due to the rubber threads stretching, either permanently or temporarily, thus causing the panels to be no longer aligned. This type of device is generally shown in the prior art in U.S. Patent No, 4,653,968. Numerous means for preventing rotation have been devised, including, for example, detent means as described in the above patent, or by deformation of the threads. Adjustment for these general types of devices, as described above, is exceedingly difficult.

An additional device in the prior art can be seen in U.S. Patent No. 4,924,549. Here, in the main embodiment, an automobile hood or trunk lid is lowered into place. The hood is raised and a tool is inserted into a recess in the head of its stud and rotated ninety degrees. A clamping rod uses a camming action to deflect an inner member which holds the stud in place.

Finally, another device, as described in the EP-A-0 611 868, that has been used to help overcome the above difficulties in alignment has been provided in a bumper in which a stud is frictionally held in place within a receptacle by grooves in the stud that mate with grooves in the receptacle. The receptacle is mounted to a frame over which the deck is seated. The deck is lowered onto the stud which retracts into the receptacle until the proper height of the deck with respect to the frame is achieved. The deck is then raised away from the bumper and a screw is rotated in the stud such that the stud expands outwardly to increase the friction of the stud within the receptacle to securely hold the stud in place. Problems here include the requirement for a tool to secure the stud in position within the receptacle and no clear "locking position" where it can easily be visually observed whether the stud is locked in position.

The present invention provides a new and improved means and method to provide an adjustable bumper that quickly and accurately provides for precise spacing of the deck lid with respect to the adjacent body panels such that a smooth, integrated appearance is achieved and any latches operate effectively.

### SUMMARY OF THE INVENTION

The present invention is directed to an automotive deck lid bumper with snap-in receptacle that is installed in the car frame with the bumper stud already in the receptacle in an extended position. By closing the hood against the assembly, either slowly or with a gentle slam, the hood pushes the bumper stud into its receptacle with a ratcheting action as the hood is closed against it. The hood is then opened and the bumper shaft is twisted approximately ninety degrees (one quarter turn) to lock it into a fixed position.

The automotive deck lid bumper of the present invention comprises a stud with a head and a shaft, the head adapted to bump against the deck lid upon closure of the deck lid against the bumper, a receptacle adapted to receive the shaft of the stud, the receptacle having means to secure the receptacle in a frame. A frictional surface is provided between the shaft of the stud and the receptacle sufficient to support the stud in a desired position within the receptacle and a lock is provided to lock the shaft portion of the stud into the receptacle by rotating the head of the stud with respect to the receptacle less than one full revolution.

It is the object of the present invention to provide an automotive deck lid bumper that is simple and easy to adjust.

It is the object of the present invention to provide an automotive deck lid bumper that may be snapped into position on a frame, such as an automobile frame, by hand pressure, without using any tools.

It is still the object of the present invention to provide an automotive deck lid bumper that is simple and easy to adjust, that, once adjusted, may be locked in place such that the deck lid will not become misadjusted with respect to adjacent panels.

It is still the object of the present invention to provide an automotive deck lid bumper that is simple and easy to adjust, that, once adjusted, may be locked in place such that the deck lid will not become misadjusted with respect to adjacent panels, that has lock-in means that firmly secures the bumper in position such that slippage is avoided.

It is still the object of the present invention to provide an automotive deck lid bumper that is simple and easy to adjust, that, once adjusted, may be locked in place such that the deck lid will not become misadjusted with respect to adjacent panels that has a lock-in means that firmly secures the bumper in position such that slippage is avoided that optionally generates an audible signal when the stud is properly locked into position in the receptacle.

It is still the object of the present invention to provide an automotive deck lid bumper that is simple and easy to adjust, that, once adjusted, may be locked in place such that the deck lid will not become misadjusted with respect to adjacent panels that is simple in construction and contains a minimal number of parts.

It is the object of the present invention to provide an automotive deck lid bumper that provides an automotive deck lid bumper that is simple and easy to adjust, that, once adjusted, may be locked in place such that the deck lid will not become misadjusted with respect to adjacent panels that is simple in construction and contains a minimal number of parts, all of which may be manufactured inexpensively.

Other objects and advantages of the present invention will become apparent from the following description taken in conjunction with the accompanying drawings.

### BRIEF DESCRIPTION OF THE DRAWINGS

FIG. 1 is a perspective view of an automotive deck lid bumper in accordance with one embodiment of the present invention viewed from the bottom of the device, as assembled with a stud in an initial snap in position in the receptacle.
FIG. 2 is a perspective view of the automotive deck lid bumper of FIG. 1 as mounted on a panel, viewed from an angle looking down at the device, as assembled, with the stud in the initial snap in position in the receptacle.
FIG. 3 is a partial section, perspective view of the automotive deck lid bumper of FIG. 1 with the stud in the initial snap in position in the receptacle.
FIG. 4 is a partial section, perspective view of the automotive deck lid bumper of FIG. 1 with the stud in a locked position in the receptacle.
FIG. 5 is a perspective view, in partial section, looking upwardly, of the automotive deck lid bumper of FIG.1, with the stud in the initial snap in position in the receptacle.
FIG. 6 is a bottom plan view of the automotive deck lid bumper of FIG. 1, partially cut away, with the stud in the temporary pre-set position.
FIG. 7 is a top plan view of a receptacle of the automotive deck lid bumper of FIG.1.
FIG. 8 is a perspective, partially cut away view of the automotive deck lid bumper of FIG. 1, with the stud in a permanent locked position in the receptacle.
FIG. 9 is a top plan view of the automotive deck lid bumper of FIG. 1, partially cut away, with the stud in the permanent locked position.
FIG. 10 is a partial section, perspective view of the automotive deck lid bumper of FIG. 1 with the stud in the receptacle in the initial snap in position.
FIG. 11 is a partially cutaway top plan view of the automotive deck lid bumper of FIG. 1, with the stud in an initial snap in position in the receptacle.
FIG. 12 is a partially cut away top plan view of the automotive deck lid bumper of FIG. 1, with the stud in the receptacle, partially rotated to approximately 35 degrees.
FIG. 13 is a top plan view of the automotive deck lid bumper of FIG. 1, with the stud in the receptacle rotated to its seated (locked) position at approximately 65 degrees.
FIG. 14 is a perspective view of a second embodiment of an automotive deck lid bumper in the initial snap in position.
FIG. 15 is a perspective view of the automotive deck lid bumper of FIG. 14, as mounted on a panel, depicting the bottom of the bumper with the stud in the initial snap in position.
FIG. 16 is a perspective view of a rubber stud cap for use on the automotive deck lid bumper of FIG. 15, showing the bottom of the cap.
FIG. 17 is a perspective view of the rubber stud of FIG. 16 showing the top of the cap. FIG. 18 is a perspective view of the stud as used on the automotive deck lid bumper of FIG. 15 with the rubber stud cap also shown, showing the bottom of the assembly.
FIG. 19 is a cross-sectional view of the stud and stud cap of FIG. 18.
FIG. 20 is a perspective view of the stud and rubber stud cap of FIG. 18 showing the top of the assembly.
FIG. 21 is a receptacle for the automotive deck lid bumper of FIG. 14.
FIG. 22 is a cross-sectional perspective view of the receptacle of FIG. 21.
FIG. 23 is a perspective view of an automotive deck lid bumper in accordance with a third embodiment of the present invention viewed from an angle looking down at the device, as assembled, with a stud in an initial snap in (unlocked) position in the receptacle.
FIG. 24 is a perspective view of the automotive deck lid bumper of FIG. 23 viewed from an angle looking down at the device, as assembled, with a stud in locked position in the receptacle.
FIG. 25 is a cross sectional view of the automotive deck lid bumper of FIG. 23 with the stud in the initial snap in (unlocked) position in the receptacle.
FIG. 26 is a cross sectional view of the automotive deck lid bumper of FIG. 23 with the stud in the locked position in the receptacle.
FIG. 27 is a partially cutaway top plan view of the automotive deck lid bumper of FIG. 23, with the stud in an initial snap in (unlocked) position in the receptacle.
FIG. 28 is a partially cut away top plan view of the automotive deck lid bumper of FIG. 23, with the stud in the receptacle, partially rotated to position between locked and unlocked.
FIG. 29 is a partially cutaway top plan view of the automotive deck lid bumper of FIG. 23, with the stud in locked position in the receptacle.
FIG. 30 is a bottom view of the stud of FIG. 23.
FIG. 31 is a simplified cross-sectional view of the stud and receptacle of FIG. 23 with the stud in the unlocked position.
FIG. 32 is a section view of the stud of FIG. 23.

### DESCRIPTION OF THE PREFERRED EMBODIMENT

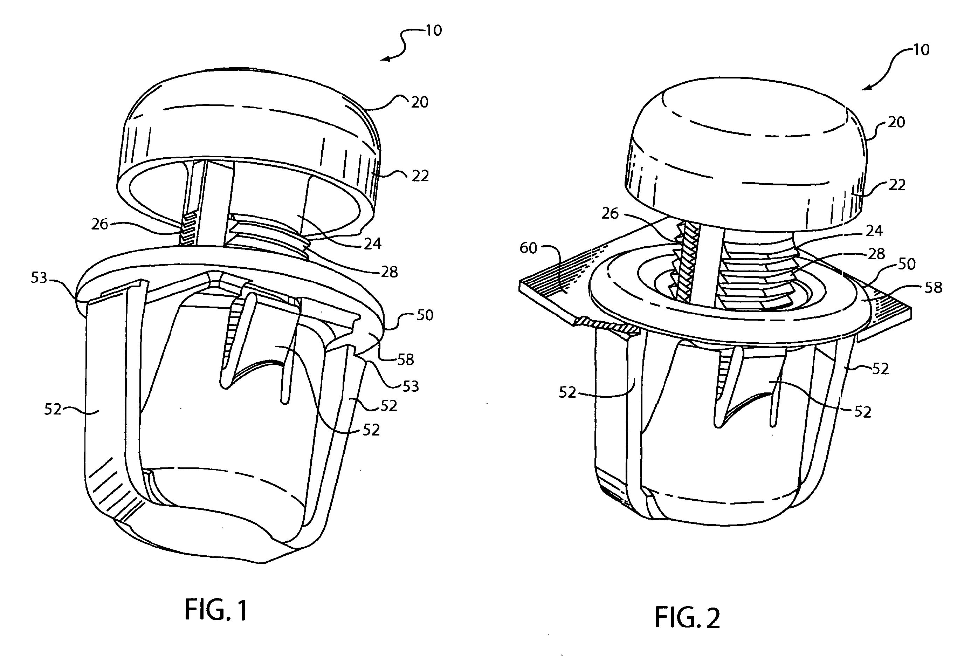

Referring now in detail to the drawings wherein like reference numbers indicate like elements throughout the several views, there is shown in FIGS. 1 and 2 an automotive deck lid bumper 10 in accordance with one preferred embodiment of the present invention. This first, preferred embodiment of the illustrative device is shown generally comprising a stud 20 and a receptacle 50.

The receptacle 50 contains a bumper retention means for retaining the deck lid bumper 10 onto an aperture in a frame or panel 60 of the automobile. This retention means may include one or more resilient snap arms 52 as shown in FIGS. 1 and 2 (two different styles shown) in combination with a receptacle flange 58 such that as the deck lid bumper 10 is pressed down into the aperture in the panel 60, the resilient snap arms 52 move inwardly until shoulders 53 are reached. When the panel 60 passes shoulder 53, the resilient snap arms 52 snap outwardly into position thereby holding the receptacle 50 in place.

The stud 20 has a head portion 22 and a shaft portion 24. The head portion 22 preferably has a generally rounded smooth upper surface which has an optional rubber cap or other relatively soft resilient material to aid in cushioning the impact of the deck lid. The shaft portion 24 of the stud 20 has two sets of ribs running axially down the outer surface of the shaft 24. First, a set of small ribs 26 on opposed sides of the shaft provides a ratcheting action (i.e. friction) against an opposed pair of receptacle ribs 54 to hold the stud 20 in place as the stud is axially lowered (or possibly raised) in the receptacle 50 during adjustment. Second, once the axial position of the stud 20 within the receptacle 50 is located, the stud 20 is rotated such that a set of large ribs 28 on the shaft portion 24 engages the receptacle ribs 54 to positively lock the stud 20 in position such that substantially no vertical movement of the stud 20 with respect to the receptacle 50 is provided. The manner in which this deck lid bumper 10 operates will be described below in greater detail.

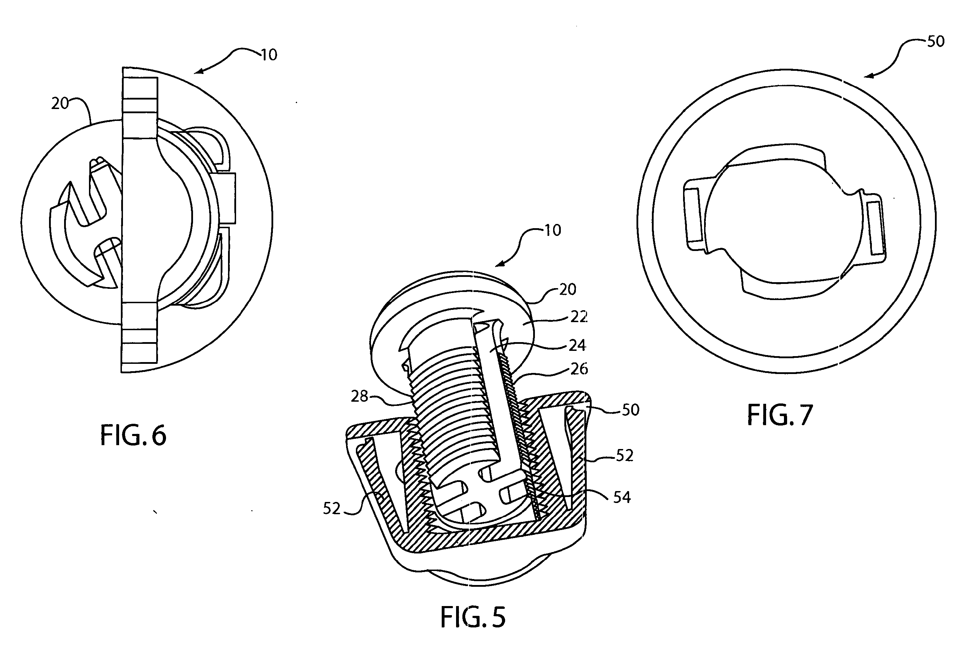

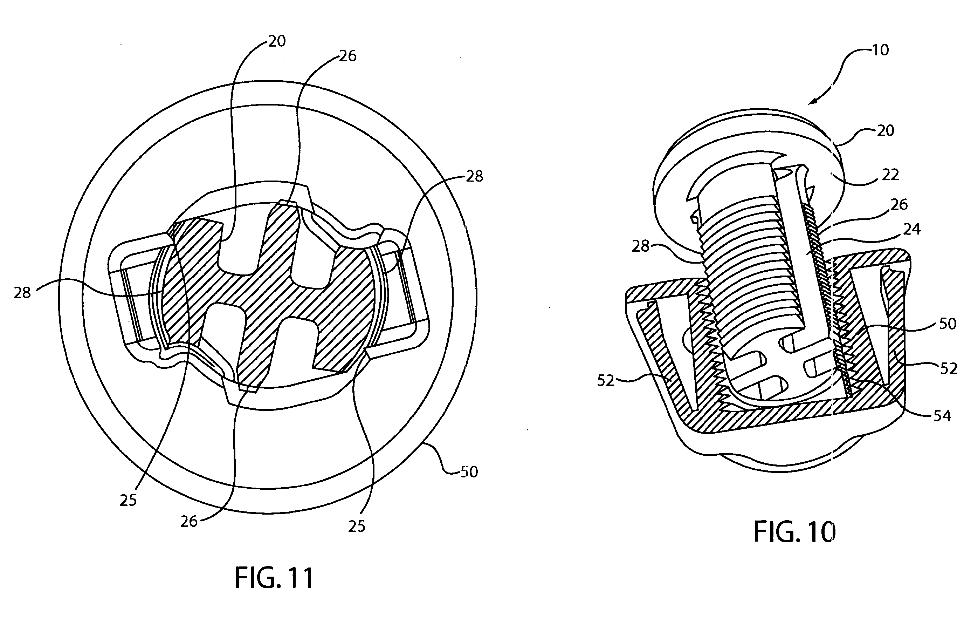

FIGS. 1-3,5, and 6 depict the deck lid bumper 10 with the stud 20 assembled with the receptacle 50 in the initial snap in position. Here, receptacle 50 of the deck lid bumper 10 is preferably attached to an automobile frame 60 (FIG. 2) and the stud 20 is in a fully extended position. The deck lid of the automobile is then lowered to the proper height to a position where the deck lid mates flush with surrounding body panels. This deck lid strikes the head portion 22 of the stud 20 causing the stud to lower into its proper vertical position within the receptacle 50. At this point, friction to hold the stud 20 in its proper vertical position is created by the ratcheting action of the set of small ribs 26 on the shaft portion of the stud 20. These ribs contact the significantly larger receptacle ribs 54, thus providing a designed-in ratchet action providing desired amount of friction. That is, the ratcheting action provides very small incremental steps, for example, in 0.8 mm increments, by which the stud 20 may be lowered (or perhaps raised) into the receptacle 50. See FIG. 7 for top view of receptacle. The cross- sectional shape of the stud shaft portion 24 is elongated and mates with the receptacle orifice 56 such that the stud 20 must fit into the receptacle orifice in its initial position when the set of small ribs 26 mates with the receptacle ribs 54. This position can also be seen in FIGS. 10 and 11. FIG. 10 depicts this initial relationship of the stud 20 with respect to the receptacle 50 in a cut away view. FIG. 11 depicts a partially cutaway plan view of the deck lid bumper 10 where a portion of the set of small ribs 26 of the stud 20 makes contact with a portion of the receptacle ribs 54 such that sufficient ratcheting-type friction is provided to property hold the stud 20 in place within the receptacle.

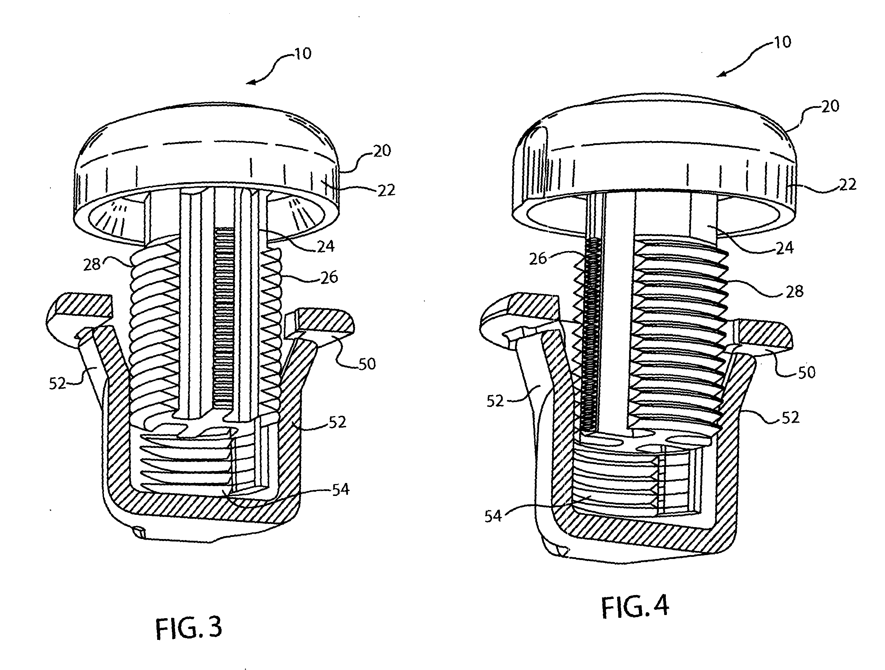

The stud 20 is then rotated clockwise for preferably less than one-quarter turn (preferably approximately sixty-five degrees) with respect to the receptacle 50 to lock the stud 20 axially in place within the receptacle 50. By turning the stud 20 ninety degrees, the small set of ribs 26 moves clear of the receptacle ribs 54, however, the set of large ribs 28 now moves into position to securely mate with the receptacle ribs 54. See FIGS. 4, 8, and 9. The set of large ribs 28 is of substantially the same pitch and shape as the receptacle ribs 54 such that substantially no vertical movement of the stud 20 with respect, to the receptacle 50 is possible.

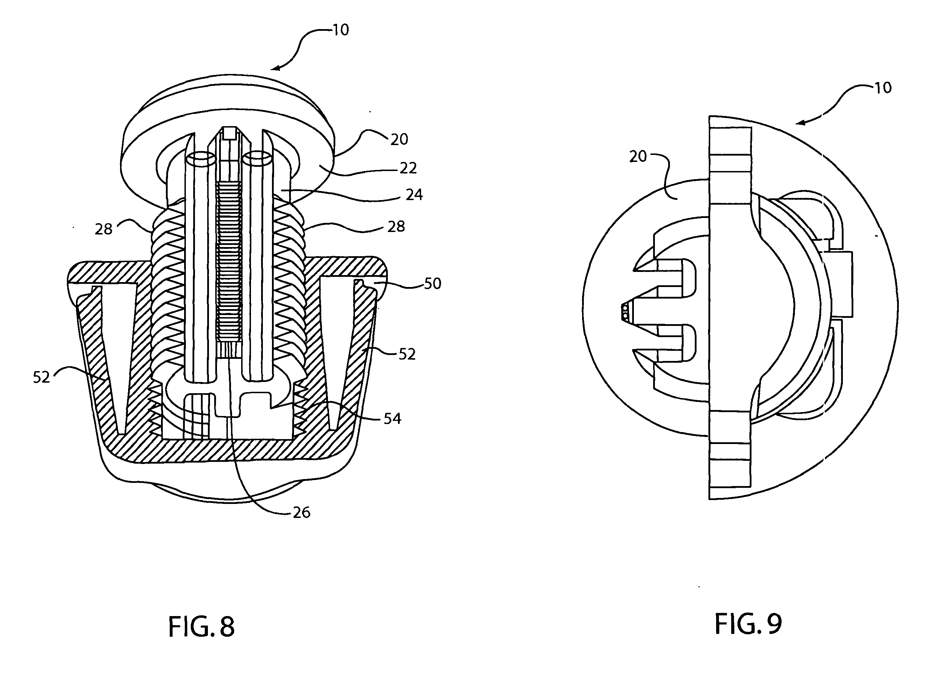

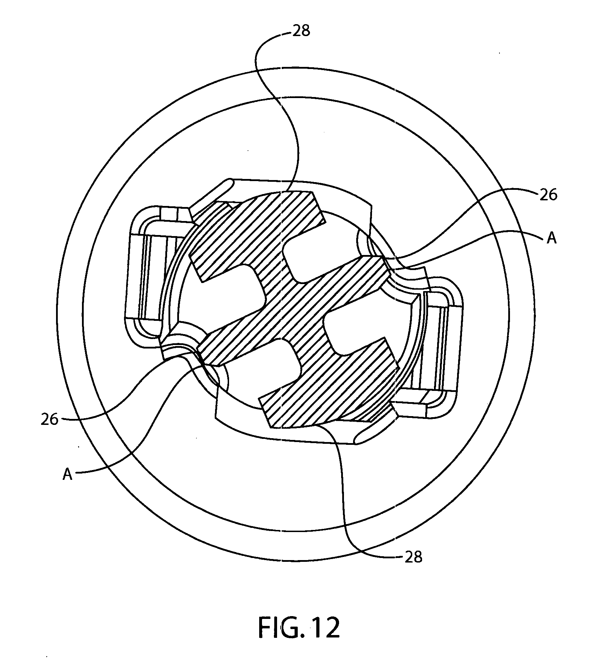

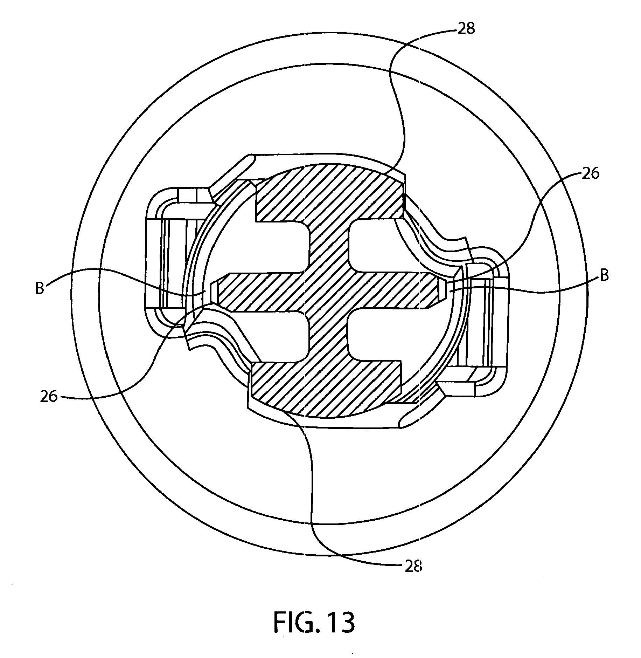

Optionally, the connection between the stud 20 and the receptacle 50 contains a "click-in" or snap in feature which provides an audible indication and positive lock when the stud 20 is rotated into the final locked in position in the receptacle 50. As can be seen in FIGS. 8 and 9, when the stud is in the initial position prior to rotation, the set of small ribs 26 makes minimal contact with the receptacle ribs 54, merely providing a ratcheting-type friction as described in detail above. When the stud 20 is rotated to, for example approximately thirty degrees, as depicted in FIG. 12, the set of small ribs 26 have a clear interference with a smooth section A on the inner surface of the receptacle 50. Therefore, as the small ribs 26 pass point A (FIG. 12) an increase in torque on the stud 20 is required. Finally, the small ribs 26 pass to an area on the inner surface of the receptacle that provides for clearance (point B of FIG. 13) of those ribs 26. See FIG. 13. The transition from point A to point B of the stud creates an audible "click" indicating that the stud 20 is properly locked into position in the receptacle. The stud 20 can be unlocked using the reverse of the above. That is, the small ribs pass from point B, through point A, until the small ribs alone make contact with the receptacle ribs 54.

This embodiment depicts two sets of two ribs using a quarter turn to lock. It is also anticipated that one set of each type of ribs using, for example, a one hundred eighty degree lock, or three or more set of ribs using less rotation to lock also operates properly and is within the scope of this invention. However, to simplify use, rotating by less than one full revolution is required.

To prevent the stud 20 from cocking with respect to the receptacle 50 when the stud 20 is in the initial snap in position, two projections 25 may be added to the receptacle. See FIG. 11.

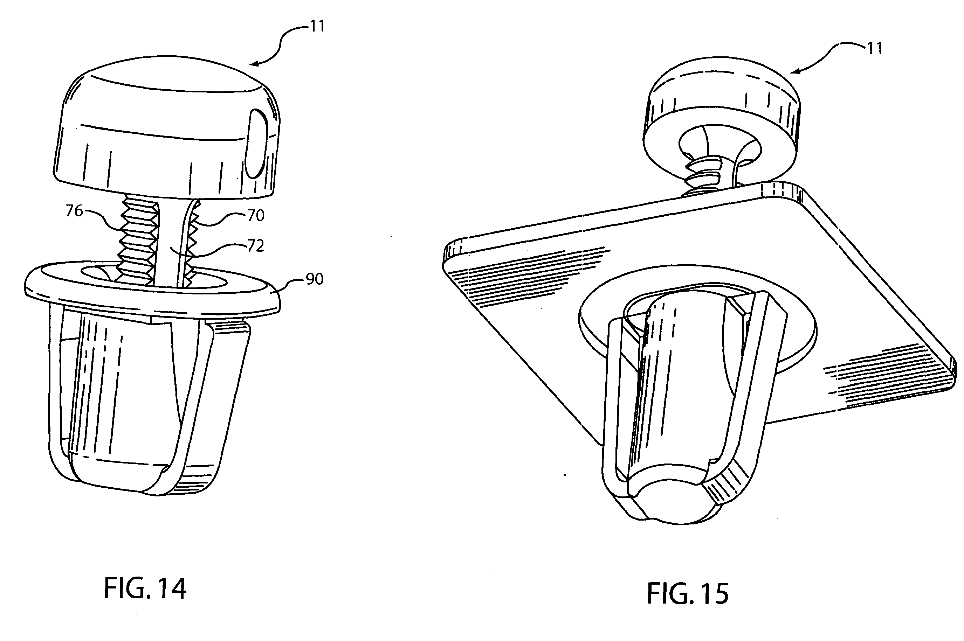

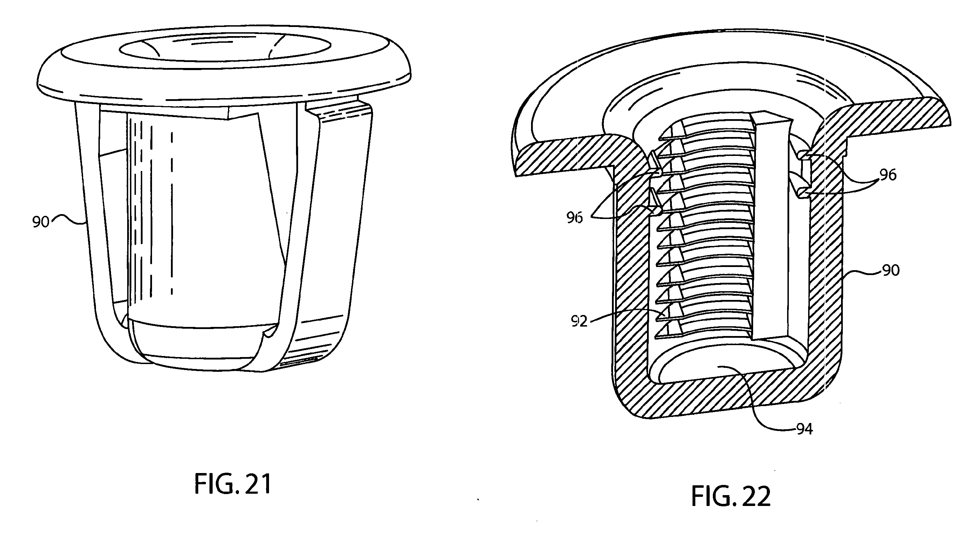

FIGS. 14 and 15 depict a second embodiment 11 of an automotive deck lid bumper. This embodiment 11 also contains the two primary elements of the first embodiment: a stud 70 and a receptacle 90. This embodiment is a somewhat more simple representation of the present invention in which only one set of ribs 76 is used on the shaft 72 of the stud 70 rather than a first set of ribs, i.e. the set of large ribs 28 and a second set of ribs, i.e. the set of small ribs 26, as in the first embodiment. Here, adequate ratcheting-type friction is provided using a slight interference fit created by two pairs of ribs 96 extending out from the aperture 94 of the receptacle 90 which mate with the ribs on the stud. See FIG. 22. Again, here, the stud 70 is located to the proper axial position within the receptacle 90 and is held in place by ratchet-type friction. The stud 70 is then rotated 90 degrees to lock the stud ribs 76 to the receptacle ribs 92 in a similar manner to that as described for the first embodiment. FIG. 21 depicts the outside of the receptacle 90 for this second embodiment.

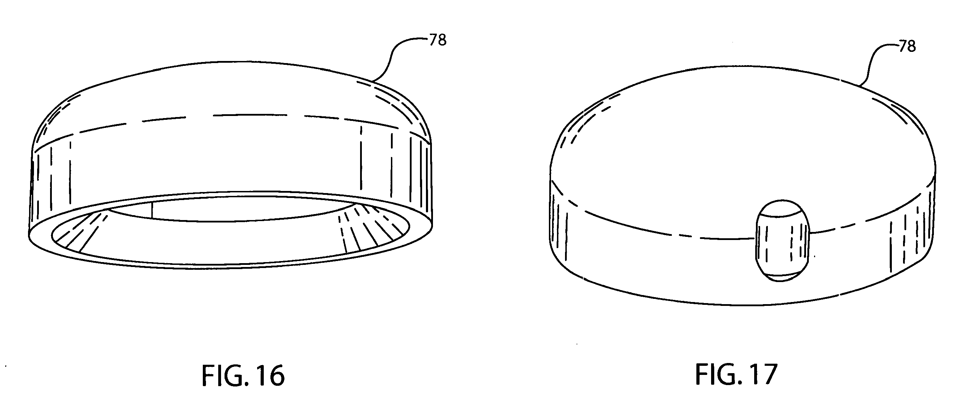

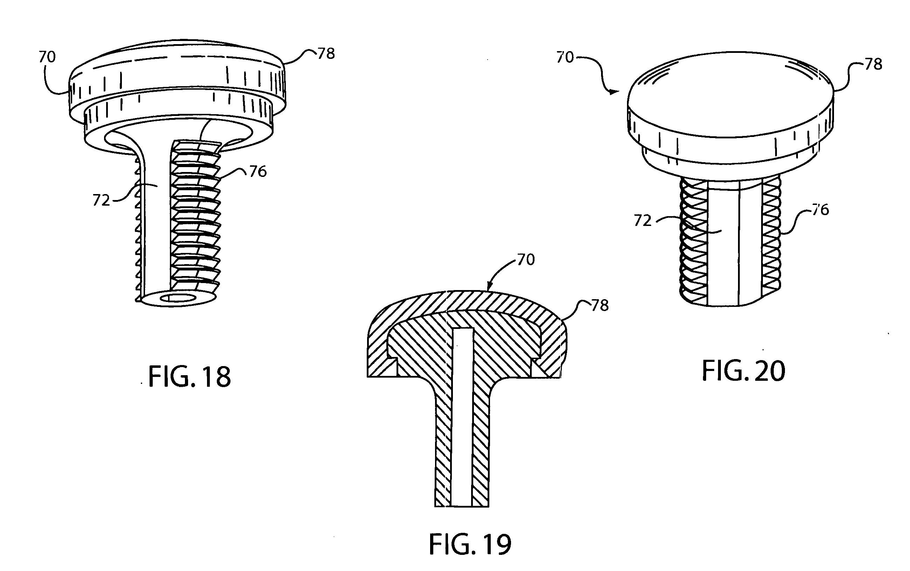

FIGS. 16 and 17 depict a separate head portion 78 of the stud 70 which may optionally be used on any embodiment herein, for example, to provide a softer rubber bumper head and harder, for example reinforced molded plastic stud and receptacle. FIGS. 18-20 depict various views of the stud 70 with optional separate head portion 78 shown. FIG. 21 depicts the receptacle 90 alone.

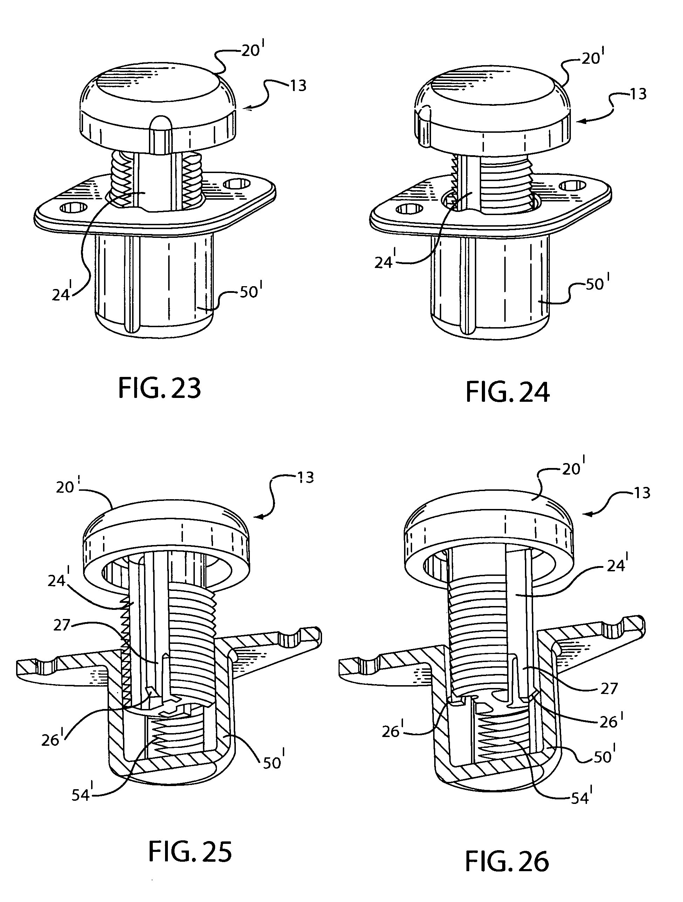

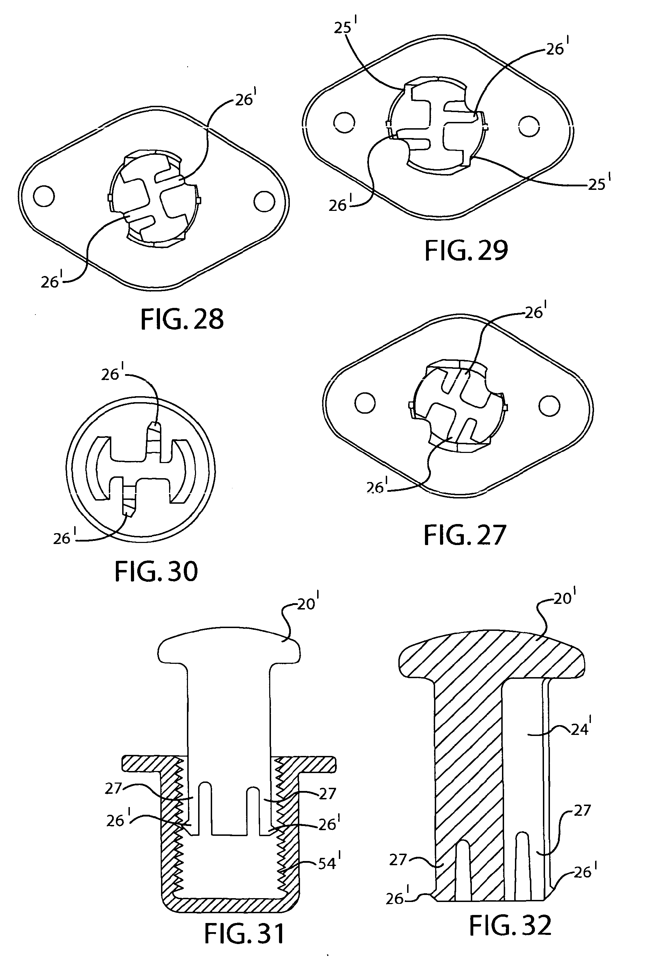

FIGS. 23-32 depict a third embodiment 13 of an automotive deck lid bumper of the present design. This embodiment is a modification of the embodiment as depicted in FIGS. 1-13 with most features functionary identical. However, rather than a set of small ribs 26 on opposed sides of the shaft that provide a ratcheting action (i.e. friction) against an opposed pair of receptacle ribs 54 to hold the stud 20 in place as the stud is axially lowered (or possibly raised) in the receptacle 50 during adjustment, a pair of teeth 26' is used for substantially the same function. See e.g. FIG. 31. However, certain improvements are obtained by use of this different structure. As can be seen in FIGS. 23 and 25-32 the teeth 26' are each located on the bottom of a cantilever beam 27. The cantilever beams 27 are integral to the shaft portion 24' of the stud 20' of this embodiment. The cantilever beams 27 permit repeated deflection of the tooth 26' with respect to the receptacle ribs 54'. This structure prevents damage to the tooth 26' which, in certain circumstances, may cause problems in the embodiment of FIGS. 1-13. In the embodiment of FIGS. 1-13, it has been found, in certain circumstances, that the set of small ribs 26 (FIGS. 1-13) wear after several cycles and which may also damage the mating receptacle ribs 54. This embodiment also provides improved radial retention of the stud 20' with respect to the receptacle 50' because the teeth 26' more correctly align with the receptacle ribs 54' to prevent radial clearance in the locked position,

The receptacle 50' of this embodiment also provides improved radial retention of the stud 20' by providing an increased amount of material in the projections 25'. The function is still substantially the same as that described above with respect to the first embodiment. However, the cantilever beams 27' allow for a greater size projection 25' allowing for improved radial retention.

This embodiment also depicts a design having integral molded in holes for mounting at low cost.

All of the above embodiments may use a separate rubber cap, as illustrated in FIGS. 17-19 for the second embodiment, if desired.

Although the description above is directed to an automotive deck lid bumper, it is anticipated that the present invention can easily be adopted for use anywhere doors or panels of any type mate with adjacent panels where construction tolerances or other factors cause the door to improperly mate with its adjacent panels.

It is also anticipated that all embodiments of the above invention can be constructed using many types of plastics. For example, the receptacle can be molded from Acetal, while the stud can be molded from glass filled nylon, with, for example, a rubber cap. It is anticipated that numerous materials would be suitable for the present application, provided that they provide a compatible relationship that provides suitable resilience for the applications as indicated herein. The stud and receptacles as described above can each be molded as a single integral piece.

For the embodiments described in detail above, the deck lid bumper may optionally be installed in either a locked position or an adjustable position.

It will be recognized by those skilled in the art that changes may be made in the above described embodiments of the invention without departing from the scope of the claims. It is understood, therefore, that this invention is not limited to the particular embodiments disclosed, but is intended to cover all modifications which are within the scope the invention as defined by the appended claims.

## Claims

1. A deck lid bumper comprising:
(a) a stud (20, 20'), having a head portion (22) and a shaft portion (24, 24'), said head portion (22) adapted to bump against said deck lid upon closure of the deck lid against the bumper;
(b) a receptacle (50, 50') adapted to receive said shaft portion (24, 24') of said stud (20, 20'), said receptacle (50, 50') having means (52,58) to secure said receptacle (50, 50') in a frame;
(c) said shaft portion (24, 24') of said stud (20, 20') having a first set of large ribs (28, 76) running axially on an outer surface of said shaft portion (24, 24') of said stud (20, 20') and one of a second set of small ribs (26) running axially down the outer surface of the shaft portion (24, 24') and at least one radial tooth (26'), said one of said second set of ribs (26) and said at least one radial tooth (26') resiliently mating with at least one receptacle rib (54, 54') on an inner surface of said receptacle (50, 50') to provide ratcheting-type friction between said shaft portion (24, 24') of said stud (20, 20') and said receptacle (50, 50') sufficient to support said stud (20, 20') in substantially a desired position within said receptacle (50, 50'); and
(d) wherein said shaft portion (24, 24') of said stud (20, 20') can be locked into said receptacle (50, 50') by axially rotating said head portion (22) of said stud (20, 20') with respect to said receptacle (50, 50') less than one full revolution, such that said first set of ribs (28, 76) engages said at least one receptacle rib (54, 54') on said inner surface of said receptacle (50, 50').

2. The deck lid bumper of claim 1, wherein said shaft portion (24) of said stud (20) has said second set of ribs (26) running axially down the outer surface of said shaft portion (24) and said at least one receptacle rib (54) is one of a plurality of receptacle ribs (54),
wherein said set of small ribs (26) comprises a plurality of small ribs provided on the outer surface of the shaft portion (24) that are adapted to resiliently mate with at least one of said plurality of receptacle ribs (54) provided on an inner surface of said receptacle (50) to provide ratcheting-type friction between said shaft portion (24) of said stud (20) and said receptacle. (50) sufficient to support said stud (20) in substantially a desired position within said receptacle (50), said set of large ribs (28) comprises ribs that are adapted to securely mate with said plurality of receptacle ribs (54), and
wherein a frictional position and a locked position are provided, said stud (20) being in said frictional position when said set of small ribs (26) engages at least one of said plurality of receptacle ribs (54) on the inner surface of said receptacle (50), and said stud (20) being in said locked position when said stud (20) is axially rotated with respect to said receptacle such that said set of large ribs (28) engages at least one of said plurality of receptacle ribs (54) on the inner surface of said receptacle (50).

3. The deck lid bumper of claim 1, wherein said shaft portion (24') of said stud (20') has said at least one radial tooth, wherein said at least one receptacle rib is one of a plurality of receptacle ribs,
wherein said first set of ribs (28) run axially down an outer surface of said shaft portion (24'), said at least one radial tooth (26') on said shaft portion (24') of said stud (20') being adapted to resiliently mate with at least one of said plurality of receptacle ribs (54') provided on said inner surface of said receptacle (50') to provide ratcheting-type friction between said shaft portion (24') of said stud (20') and said receptacle (50') sufficient to support said stud (20') in substantially a desired position within said receptacle (50'), said first set of ribs (28) of said shaft portion (24') of said stud (20') comprising ribs adapted to securely mate with said plurality of receptacle ribs (54'), and
wherein a frictional position and a locked position are provided, said stud (20') being in said frictional position when said at least one radial tooth (26') engages said at least one of said plurality of receptacle ribs (54') on the inner surface of said receptacle (50'), and said stud (20') being in said locked position when said stud (20') is axially rotated with respect to said receptacle (50') such that at least one of said first set of ribs (28) on said shaft portion (24') engages at least one of said plurality of receptacle ribs (54') on the inner surface of said receptacle (50')

4. The deck lid bumper of claim 3, wherein said radial tooth (26') is provided at the bottom of a cantilever beam (27) that is integral with said shaft portion (24') of said stud (20').

5. The deck lid bumper of claim 1, wherein said shaft portion (24') of said stud (20') has at least one radial tooth and said at least one radial tooth is one of a pair of radial teeth (26'),
wherein each of said pair of radial teeth (26') is provided on said shaft portion (24') of said stud (20') and is adapted to resiliently mate with at least one receptacle rib (54') of a respective one of two sets of receptacle ribs (54') provided on an inner surface of said receptacle (50') to provide ratcheting-type friction between said shaft portion (24') of said stud (20') and said receptacle (50') sufficient to support said stud (20') in substantially a desired position within said receptacle (50'), said first set of ribs (28) comprising ribs adapted to securely mate with at least one receptacle rib (54') of one of said two sets of receptacle ribs, and
wherein a frictional position and a locked position are provided, said stud (20') being in said frictional position when each of said pair of radial teeth (26') on said shaft portion (24') of said stud (20') engages at least one receptacle rib (54') of said respective one of said two sets of receptacle ribs on the inner surface of said receptacle (50'), and said stud (20') being in said locked position when said stud (20') is axially rotated with respect to said receptacle. (50') such that at least one of said first set of ribs (28) engages at least one receptacle rib (54') of one of said two sets of receptacle ribs on the inner surface of said receptacle (50').

6. The deck lid bumper of claim 5, wherein each of said pair of radial teeth (26') is provided at the bottom of a cantilever beam (27) that is integral with said shaft portion (24') of said stud (20').

7. A deck lid bumper comprising:
a stud (70), having a head (78) portion and a shaft portion (72), said head portion (78) adapted to bump against said deck lid upon closure of the deck lid against the bumper;
a receptacle (90) adapted to receive said shaft portion (72) of said stud (70), said receptacle (90) having means (52, 58) to secure said receptacle in a frame;
said shaft portion (72) of said stud (70) having a set of ribs (76) running axially down the outer surface of said shaft portion (72) and said receptacle (90) having at least one receptacle rib (96) for providing ratcheting-type friction between said shaft portion (72) of said stud (70) and said receptacle (90), said at least one receptacle rib (96) for providing ratcheting-type friction being provided on an inner surface of said receptacle (90); and
said receptacle also having a set of receptacle ribs (92) for securing said stud (70) in the locked position, said set of receptacle ribs (92) for securing said stud (70) in the locked position securely mating with said set of ribs (76) of said shaft portion (72) of said stud (70) when said stud (70) is in a locked position, said set of ribs (76) of said shaft portion (72) of said stud (70) being adapted to resiliently mate with said at least one receptacle rib (96) for providing ratcheting-type friction to provide ratcheting-type friction between said shaft portion (72) of said stud (70) and said receptacle (90) sufficient to support said stud (70) in substantially a desired position within said receptacle (90);
wherein said stud (70) is in a frictional position when said set of ribs (76) of said shaft portion (72) of said stud (70) engages said at least one receptacle rib (96) for providing ratcheting-type friction on the inner surface of said receptacle (90), and said stud (70) being in said locked position when said stud (70) is axially rotated with respect to said receptacle (90) less than one full revolution, such that said set of ribs (76) of said shaft portion (72) of said stud (70) engages at least one of said set of receptacle ribs (92) for securing said stud (70) in the locked position.

8. The deck lid bumper according to any one of claims 1-7, wherein said means to secure said receptacle (50, 50', 90) in a frame comprises one or more resilient snap arms (52) and a receptacle flange (58) for holding the receptacle (50, 50', 90) in place after said receptacle (50, 50', 90) has been pressed down into an aperture in the frame.

9. The deck lid bumper according to any one of claims 1-8, wherein the head portion (22, 78) includes an upper surface, said upper surface including resilient material.

10. The deck lid bumper according to any one of claims 1-, further comprising a snap-in feature that snaps into place when the stud (20, 20', 70) is fully rotated into a locked position.

11. The deck lid bumper of claim 10, wherein the snap-in feature audibly indicates when the stud (20, 20', 70) is fully rotated into a locked position.

## Patentansprüche

1. Stoßdämpfer für Kofferraumdeckel, der Folgendes aufweist:
(a) einen Stehbolzen (20, 20') mit einem Kopfteil (22) und einem Schaftteil (24, 24'), wobei der Kopfteil (22) so ausgelegt ist, dass er nach dem Schließen des Kofferraumdeckels an diesem anstößt;
(b) eine zur Aufnahme des Schaftteils (24, 24') des Stehbolzenes (20, 20') ausgelegte Aufnahme (50, 50'), die Mittel (52, 58) aufweist, um die Aufnahme (50, 50') in einem Rahmen zu sichern;
(c) der Schaftteil (24, 24') des Stehbolzens (20, 20') hat einen ersten Satz großer Rippen (28, 76), die auf einer Außenfläche des Schaftteils (24, 24') des Stehbolzens (20, 20') axial verlaufen, und einen zweiten Satz schmaler Rippen (26), die auf der Außenfläche des Schaftteils (24, 24') axial nach unten verlaufen, und mindestens einen radialen Zahn (26'), wobei der eine des zweiten Satzes Rippen (26) und der mindestens eine radiale Zahn (26') federnd mit mindestens einer auf einer Innenfläche der Aufnahme (50, 50') vorgesehenen Aufnahmerippe (54, 54') zusammenwirkt, um eine ratschenartige Reibung zwischen dem Schaftteil (24, 24') des Stehbolzens (20, 20') und der Aufnahme (50, 50') zu erhalten, die ausreicht, den Stehbolzen (20; 20') im Wesentlichen in einer gewünschten Lage in der Aufnahme (50, 50') zu halten; sowie
(d) einen Schaftteil (24, 24') des Stehbolzens (20, 20'), der in der Aufnahme (50, 50') durch axiales Drehen des Kopfteils (22) des Stehbolzens (20, 20') in Bezug auf die Aufnahme (50, 50') um weniger als eine volle Umdrehung arretiert werden kann, so dass der erste Satz Rippen (28, 76) mit mindestens einer Aufnahmerippe (54, 54') auf der Innenfläche der Aufnahme (50, 50') im Eingriff ist.

2. Stoßdämpfer für Kofferraumdeckel nach Anspruch 1,
bei dem der Schaftteil (24) des Stehbolzens (20) den zweiten Satz Rippen (26) hat, die axial auf der Außenfläche des Schaftteils (24) des Stehbolzens (20) nach unten verläuft, und wobei mindestens eine Aufnahmerippe (54) eine von vielen Aufnahmerippen (54) ist,
wobei der Satz schmaler Rippen (26) eine Vielzahl von auf der Außenfläche des Schaftteils (24) vorgesehener schmaler Rippen aufweist, die geeignet sind, federnd mit mindestens einer der vielen auf der Innenfläche der Aufnahme (50) vorgesehenen Aufnahmerippen zusammenzuwirken, um eine ratschenartige Reibung zwischen dem Schaftteil (24) des Stehbolzenes (20) und der Aufnahme (50) zu bewirken, die ausreicht, den Stehbolzen (20) im Wesentlichen in einer gewünschten Lage in der Aufnahme (50) zu halten, wobei der Satz großer Rippen (28) Rippen aufweist, die ausgelegt sind, um sicher mit der Vielzahl von Aufnahmerippen (54) zusammenzuwirken, und
wobei eine Reibposition und eine Sperrposition vorgesehen sind, wobei sich der Stehbolzen (20) in der Reibposition befindet, wenn der Satz schmaler Rippen (26) mit mindestens einer der vielen Aufnahmerippen (54), auf der Innenfläche der Aufnahme (50) in Eingriff ist, und der Stehbolzen (20) in der Sperrposition ist, wenn er axial in Bezug auf die Aufnahme gedreht wird, so dass der Satz großer Rippen (28) mit mindestens einer der vielen Aufnahmerippen (54) auf der Innenfläche der Aufnahme (50) in Eingriff ist.

3. Stoßdämpfer für Kofferraumdeckel nach Anspruch 1,
wobei der Schaftteil (24') des Stehbolzenes (20') den mindestens einen Zahn aufweist, wobei die mindestens eine Aufnahmerippe eine der vielen Aufnahmerippen ist,
wobei die erste Satz Rippen (28) auf der Außenfläche des Schaftteils (24') axial nach unten verläuft und der mindestens eine radiale Zahn (26') auf dem Schaftteils (24') des Stehbolzens (20') eingerichtet ist, um federnd mit mindestens einer der vielen auf der Innenfläche der Aufnahme (50') vorgesehenen Aufnahmerippen (54') zusammenzuwirken, um eine ratschenartige Reibung zwischen dem Schaftteil (24') des Stehbolzens (20') und der Aufnahme (50') zu bewirken, die groß genug ist, um den Stehbolzen (20') im Wesentlichen in einer gewünschten Position innerhalb der Aufnahme (50') zu halten, wobei der erste Satz Rippen (28) des Schaftteils (24') des Stehbolzens (20') Rippen aufweist, die zum sicheren Verbinden mit der Vielzahl von Aufnahmerippen (54') ausgelegt sind, und
wobei eine Reibposition und eine Sperrposition vorgesehen sind, wobei sich der Stehbolzen (20') in der Reibposition befindet, wenn der mindestens eine radiale Zahn (26') in die mindestens eine der vielen Aufnahmerippen (54') auf der Innenfläche der Aufnahme (50') eingreift, und der Stehbolzen (20') in der Sperrposition ist, wenn er axial in Bezug auf die Aufnahme (50') gedreht wird, so dass mindestens eine des ersten Satzes Rippen (28) auf dem Schaftteil (24') in mindestens eine der vielen Aufnahmerippen (54') auf der Innenfläche der Aufnahme (50') eingreift.

4. Stoßdämpfer für Kofferraumdeckel nach Anspruch 3,
wobei der radiale Zahn (26') am Boden eines frei auskragenden Arms (27) vorgesehen ist, der einstückig mit dem Schaftteil (24') des Stehbolzens (20') ausgebildet ist.

5. Stoßdämpfer für Kofferraumdeckel nach Anspruch 1,
wobei der Schaftteil (24') des Stehbolzens (20') mindestens einen radialen Zahn aufweist, der ein Zahn eines radialen Zahnradpaars (26') ist,
wobei jeder der radialen Zahnpaare (26') auf dem Schaftteil (24') des Stehbolzens (20') vorgesehen und geeignet ist, federnd mit mindestens einer Aufnahmerippe (54') eines entsprechenden der beiden Sätze von Aufnahmerippen (54') zusammenzuwirken, die auf einer Innenfläche der Aufnahme (50') vorgesehen sind, um eine ratschenartige Reibung zwischen dem Schaftteil (24') des Stehbolzens (20') und der Aufnahme (50') zu bewirken, die ausreicht, den Stehbolzen (20') im Wesentlichen in einer gewünschten Lage in der Aufnahme (50') zu halten, wobei der erste Satz Rippen (28) Rippen hat, die zum sicheren Zusammenwirken mit mindestens einer Aufnahmerippe (54') einer der beiden Sätze von Rippen ausgelegt sind, und
wobei eine Reibposition und eine Sperrposition vorgesehen sind, wobei sich der Stehbolzen (20') in der Reibposition befindet, wenn jedes der radialen Zahnpaare (26') auf dem Schaftteil (24') des Stehbolzens (20') mit jeweils mindestens einer Aufnahmerippe (54') des entsprechenden einen der zwei Sätze von Aufnahmerippen auf der Innenfläche der Aufnahme (50') in Eingriff ist, und der Stehbolzen (20') sich in der Sperrposition befindet, wenn er axial in Bezug auf die Aufnahme (50') gedreht wird, so dass mindestens eine des ersten Satzes Rippen (28) mit mindestens einer Aufnahmerippe (54') des einen der beiden Sätze von Aufnahmerippen auf der Innenfläche der Aufnahme (50') in Eingriff ist.

6. Stoßdämpfer für Kofferraumdeckel nach Anspruch 5,
wobei jedes radiale Zahnpaar (26') am Boden eines frei auskragenden Arms (27) vorgesehen ist, der einstückig mit dem Schaftteil (24') des Stehbolzens (20') ausgebildet ist.

7. Stoßdämpfer für Kofferraumdeckel der Folgendes aufweist:
einen Stehbolzen (70) mit einem Kopfteil (78) und einem Schaftteil (72), wobei der Kopfteil (78) so ausgelegt ist, dass er nach dem Schließen des Kofferraumdeckel an diesem anzustößt;
eine zur Aufnahme des Schaftteils (72) des Stehbolzenes (70) ausgebildete Aufnahme (90), die Mittel (52, 58) zur Befestigung in einem Rahmen aufweist;
der Schaftteil (72) des Stehbolzens (70) hat einen Satz Rippen (76), die auf der Außenfläche des Schaftteils (72) axial nach unten verlaufen, und die Aufnahme (90) hat mindestens eine Aufnahmerippe (96), um eine ratschenartige Reibung zwischen dem Schaftteil (72) des Stehbolzens (70) und der Aufnahme (90) zu bewirken, wobei die mindestens eine Aufnahmerippe (96) zur Erzeugung der ratschenartigen Reibung an einer Innenfläche der Aufnahme (90) vorgesehen ist; und
wobei die Aufnahme zur Sicherung des Stehbolzens (70) in Sperrposition auch einen Satz Aufnahmerippen (92) aufweist, der zur Sicherung des Stehbolzens (70) in der Sperrposition mit dem Satz Rippen (76) des Schaftteiles (72) des Stehbolzend (70') sicher zusammenwirkt, wenn sich der Stehbolzen (70) in der Sperrposition befindet, wobei der Satz Rippen (76) des Schaftteils (72) des Stehbolzens (70) dazu geeignet ist, federnd mit mindestens einer Aufnahmerippe (96) zusammenzuwirken, um eine ratschenartige Reibung zwischen dem Schaftteil (72) des Stehbolzens (70) und der Aufnahme (90) zu erreichen, die ausreicht, um den Stehbolzen (70) im Wesentlichen in einer gewünschten Position innerhalb der Aufnahme (90) zu halten;
wobei sich der Stehbolzen (70) in einer Reibposition befindet, wenn der Satz Rippen (76) des Schaftteils (72) des Stehbolzens (70) im Eingriff mit mindestens einer Aufnahmerippe (96) ist, um eine ratschenartiger Reibung auf der Innenfläche der Aufnahme (90) zu erzeugen, und wobei sich der Stehbolzen (70) in der Sperrposition befindet, wenn er in Bezug auf die Aufnahme (90) um weniger als eine volle Umdrehung axial gedreht wird, so dass der Satz Rippen (76) des Schaftteils (72) des Stehbolzens (70) mindestens in eine der Aufnahmerippen (92) eingreift, um dem Stehbolzen (70) in der Sperrposition zu sichern.

8. Stoßdämpfer für Kofferraumdeckel nach einem der Ansprüche 1-7, wobei die Mittel zur Sicherung der Aufnahme (50, 50', 90) in einem Rahmen einen oder mehrere federnde Rastarme (52) und einen Aufnahmeflansch (58) zur Lagefixierung der Aufnahme (50, 50', 90) aufweisen, nachdem die Aufnahme (50, 50', 90) in eine Öffnung des Rahmens nach unten gedrückt worden ist.

9. Stoßdämpfer für Kofferraumdeckel nach einem der Ansprüche 1-8, wobei das Kopfteil (22, 78) eine Oberfläche hat, die einen elastischen Werkstoff aufweist.

10. Stoßdämpfer für Kofferraumdeckel nach einem der Ansprüche 1-9, der außerdem eine Rastfunktion aufweist, die einrastet, wenn der Stehbolzen (20, 20', 70) vollständig in eine Sperrposition gedreht ist.

11. Stoßdämpfer für Kofferraumdeckel nach Anspruch 10,
wobei die Rastfunktion hörbar anzeigt, wenn der Stehbolzen (20, 20', 70) vollständig in eine Sperrposition gedreht ist.

## Revendications

1. Pare-chocs de porte de coffre arrière comprenant :
a) un goujon (20, 20'), comportant une partie de tête (22) et une partie de tige (24, 24'), ladite partie de tête (22) étant adaptée pour buter contre ladite porte de coffre arrière lors de la fermeture de la porte de coffre arrière contre le pare-chocs ;
b) un logement (50, 50') adapté pour recevoir ladite partie de tige (24, 24') dudit goujon (20, 20'), ledit logement(50, 50') comportant des moyens (52, 58) pour fixer ledit logement(50, 50') dans un bâti ;
c) ladite partie de tige (24, 24') dudit goujon (20, 20') comportant un premier ensemble de grandes nervures (28, 76) se développant axialement sur une surface extérieure de ladite partie de tige (20, 20') dudit goujon (20, 20') et l'une d'un second ensemble de petites nervures (26) se développant axialement vers le bas de la surface extérieure de la partie de tige (24, 24') et au moins une dent radiale (26'), ladite une nervure dudit second ensemble de nervures (26) et ladite au moins une dent radiale (26') s'adaptant de façon élastique avec au moins une nervure de logement (54, 54') située sur une surface intérieure dudit réceptacle afin de fournir, entre ladite partie de tige (24, 24') dudit goujon (20, 20') et ledit logement (50, 50'), une friction de type à encliquetage suffisante pour supporter ledit goujon (20, 20') dans une position essentiellement souhaitée à l'intérieur dudit logement (50, 50') ; et
d) dans lequel ladite partie de tige (24, 24') dudit goujon (20, 20') peut être bloquée dans ledit logement (50, 50') en faisant tourner axialement ladite partie de tête (22) dudit goujon (20, 20') par rapport audit logement (50, 50') de moins d'un tour complet, de telle sorte que ledit premier ensemble de nervures (28, 76) s'engage avec ladite au moins une nervure du logement (54, 54') sur ladite surface intérieure dudit logement(50, 50').

2. Pare-chocs de porte de coffre arrière selon la revendication 1, dans lequel ladite partie de tige (24) dudit goujon (20) présente ledit second ensemble de nervures (26) se développant axialement vers le bas de la surface extérieure de ladite partie de tige (24) et dans lequel ladite au moins une nervure de logement(54) est l'une d'une pluralité de nervures de logement(54),
dans lequel ledit ensemble de petites nervures (26) comprend une pluralité de petites nervures prévues sur la surface extérieure de la partie de tige (24), lesquelles sont adaptées pour s'adapter élastiquement avec au moins l'une de ladite pluralité de nervures de logement(54) prévues sur une surface intérieure dudit logement (50) afin de fournir, entre ladite partie de tige (24) dudit goujon (20) et ledit logement(50), une friction du type à encliquetage suffisante pour supporter ledit goujon (20) dans une position essentiellement souhaitée à l'intérieur dudit logement(50), ledit ensemble de grandes nervures (28) comprend des nervures qui sont adaptées pour s'accoupler de façon sûre avec ladite pluralité de nervures de logement(54), et
dans lequel une position frictionnelle et une position verrouillée sont prévues, ledit goujon (20) étant dans ladite position frictionnelle lorsque ledit ensemble de petites nervures (26) s'engage avec au moins l'une de ladite pluralité de nervures de logement(54) sur la surface intérieure dudit logement (50), et ledit goujon (20) étant dans ladite position verrouillée lorsque ledit goujon (20) est tourné axialement par rapport au dit logement, de telle sorte que ledit ensemble de grandes nervures (28) s'engage avec au moins l'une de ladite pluralité de nervures de logement(54) sur la surface intérieure dudit logement(50).

3. Pare-chocs de porte de coffre arrière selon la revendication 1, dans lequel ladite partie de tige (24') dudit goujon (20') possède ladite au moins une dent radiale, dans lequel ladite au moins une nervure de logement est une nervure d'une pluralité de nervures de logement,
dans lequel ledit premier ensemble de nervures (28) se développe axialement vers le bas d'une surface extérieure de ladite partie de tige (24'), ladite au moins une dent radiale (26') sur ladite partie de tige (24') dudit goujon (20') étant adaptée pour s'accoupler de façon élastique avec au moins une nervure de ladite pluralité de nervures de logement (54') prévues sur ladite surface intérieure dudit logement(50') afin de fournir entre ladite partie de tige (24') dudit goujon (20') et ledit logement(50'), une friction du type à encliquetage suffisante pour supporter ledit goujon (20') dans une position essentiellement souhaitée à l'intérieur dudit logement(50'), ledit premier ensemble de nervures (28) de ladite partie de tige (24') dudit goujon (20') comportant des nervures adaptées pour s'accoupler de façon sûre avec ladite pluralité de nervures de logement (54'), et
dans lequel une position frictionnelle et une position verrouillée sont prévues, ledit goujon (20') se trouvant dans ladite position frictionnelle lorsque ladite au moins une dent radiale (26') s'engage avec ladite au moins une nervure de ladite pluralité de nervures du logement (54') sur la surface intérieure dudit logement(50'), et ledit goujon (20') se trouvant dans ladite position verrouillée lorsque ledit goujon (20') est tourné axialement par rapport au dit logement(50'), de telle sorte que au moins une nervure dudit premier ensemble de nervures (28) sur ladite partie de tige (24') s'engage avec au moins une nervure de ladite pluralité de nervures de logement(54') sur la surface intérieure dudit logement(50').

4. Pare-chocs de porte de coffre arrière selon la revendication 3, dans lequel ladite dent radiale (26') est prévue au niveau du bas d'un bras en porte-à-faux (27) qui est solidaire de ladite partie de tige (24') dudit goujon (20').

5. Pare-chocs de porte de coffre arrière selon la revendication 1, dans lequel ladite partie de tige (24') dudit goujon (20') comporte au moins une dent radiale et ladite au moins une dent radiale est l'une d'une paire de dents radiales (26'),
dans lequel chaque dent de ladite paire de dents radiales (26') est fournie sur ladite partie de tige (24') dudit goujon (20') et est adaptée pour s'accoupler de façon élastique avec au moins une nervure de logement (54') d'un ensemble respectif des deux ensembles de nervures de logement (54') prévues sur une surface intérieure dudit logement (50') afin de fournir entre ladite partie de tige (24') dudit goujon (20') et ledit logement(50') une friction du type à encliquetage suffisante pour supporter ledit goujon (20') dans une position essentiellement souhaitée à l'intérieur dudit logement (50'), ledit premier ensemble de nervures (28) comprenant des nervures adaptées pour s'accoupler de façon sûre avec au moins une nervure de logement(54') de l'un desdits deux ensembles de nervures de logement, et
dans lequel une position frictionnelle et une position verrouillée sont fournies, ledit goujon (20') se trouvant dans ladite position frictionnelle lorsque chaque dent de ladite paire de dents radiales (26') sur ladite partie de tige (24') dudit goujon (20') s'engage avec au moins une nervure de logement(54') dudit ensemble respectif desdits deux ensembles de nervures de logement sur la surface intérieure dudit logement (50'), et ledit goujon (20') se trouvant dans ladite position verrouillée lorsque ledit goujon (20') est tourné axialement par rapport au dit logement (50'), de telle sorte qu'au moins une nervure dudit premier ensemble de nervures (28) s'engage avec au moins une nervure de logement (54') de l'un desdits deux ensembles de nervures de logement sur la surface intérieure dudit logement(50').

6. Pare-chocs de porte de coffre arrière selon la revendication 5, dans lequel chaque dent de ladite paire de dents radiales (26') est fournie au niveau du bas d'un bras en porte-à-faux (27), lequel est solidaire de ladite partie de tige (24') dudit goujon (20').

7. Pare-chocs de porte de coffre arrière comportant :
un goujon (70), comportant une partie de tête (78) et une partie de tige (72), ladite partie de tête (78) étant adaptée pour buter contre ladite porte de coffre arrière lors de la fermeture de la porte de coffre arrière contre le pare-chocs ;
un logement (90) adapté pour recevoir ladite partie de tige (72) dudit goujon (70), ledit logement(90) comportant des moyens (52, 58) pour fixer ledit logement dans un bâti ;
ladite partie de tige (72) dudit goujon (70) comportant un ensemble de nervures (76) s'étendant axialement vers le bas de la surface extérieure de ladite partie de tige (72) et ledit logement (90) comportant au moins une nervure de logement (96) permettant de fournir une friction de type à encliquetage entre ladite partie de tige (72) dudit goujon (70) et ledit logement (90), ladite au moins une nervure de logement (96) servant à fournir une friction du type à encliquetage étant prévue sur une surface intérieure dudit logement (90) ; et
ledit logement comportant également un ensemble de nervures de logement (92) permettant de fixer ledit goujon (70) dans la position verrouillée, ledit ensemble de nervures de logement (92) permettant de fixer ledit goujon (70) dans la position verrouillée s'accouplant de façon sûre avec ledit ensemble de nervures (76) de ladite partie de tige (72) dudit goujon (70) lorsque ledit goujon (70) se trouve dans une position verrouillée, ledit ensemble de nervures (76) de ladite partie de tige (72) dudit goujon (70) étant adapté pour s'accoupler élastiquement avec ladite au moins une nervure de logement (96) pour fournir, entre ladite partie de tige (72) dudit goujon (70) et ledit logement (90), une friction du type à encliquetage suffisante pour supporter ledit goujon (70) dans une position essentiellement souhaitée à l'intérieur dudit logement (90) ;
dans lequel ledit goujon (70) se trouve dans une position frictionnelle lorsque ledit ensemble de nervures (76) de ladite partie de tige (72) dudit goujon (70) s'engage avec ladite au moins une nervure de logement (96) pour fournir une friction de type à encliquetage sur la surface intérieure dudit logement (90), et dans lequel ledit goujon (70) se trouve dans ladite position verrouillée lorsque ledit goujon (70) est tourné axialement par rapport audit logement (90) de moins d'un tour complet, de telle sorte que ledit ensemble de nervures (76) de ladite partie de tige (72) dudit goujon (70) s'engage avec au moins une nervure dudit ensemble de nervures de logement (92) pour fixer ledit goujon (70) dans la position verrouillée.

8. Pare-chocs de porte de coffre arrière selon l'une quelconque des revendications 1 à 7, dans lequel lesdits moyens pour fixer ledit logement (50, 50', 90) dans un bâti comportent un ou plusieurs bras à encliquetage élastique (52) et un rebord de logement (58) permettant de maintenir en place le logement (50, 50', 90) après que ledit logement (50, 50', 90) a été enfoncé dans une ouverture dans le bâti.

9. Pare-chocs de porte de coffre arrière selon l'une quelconque des revendications 1 à 8, dans lequel la partie de tête (22, 78) comporte une surface supérieure, ladite surface supérieure incluant un matériau élastique.

10. Pare-chocs de porte de coffre arrière selon l'une quelconque des revendications 1 à 9, comprenant, de plus, un dispositif d'encliquetage qui se fixe en place par encliquetage lorsque le goujon (20, 20', 70) est tourné complètement dans une position verrouillée.

11. Pare-chocs de porte de coffre arrière selon la revendication 10, dans lequel le dispositif d'encliquetage indique de façon sonore quand le goujon (20, 20', 70) est complètement tourné dans une position verrouillée.
